# DEMANDE DE BREVET EUROPEEN

(11) **EP 4 745 942 A1**
(43) Date de publication de la demande: **20.05.2026**
(21) Numéro de dépôt: 24315527.2
(22) Date de dépôt: 18.11.2024
(51) Int. Cl.: G09B 5/04, G09B 5/06, G06N 3/00

(54) **DISPOSITIF INTERACTIF DE CONTAGE D'HISTOIRE, PROCÉDÉ DE CONTAGE D'HISTOIRE, PRODUIT PROGRAMME ET ENSEMBLE DE CONTAGE D'HISTOIRE**

(71) Demandeur: Jamond, Nicolas, 92160 Antony (FR)
(72) Inventeur: Jamond, Nicolas, 92160 Antony (FR)
(74) Mandataire: Tranvouez, Edern Morgan

(57) **Abrégé**

Dispositif interactif de contage d'histoires (3) comprenant : un haut-parleur (10) ; un écran (20) ; un système de communication (30), une unité de commande (40) configurée pour commander le haut-parleur (10) et l'affichage de l'écran (20) et, un capteur audio (50). L'unité de commande (40) est configurée pour : transmettre l'au moins une commande orale à l'au moins une unité informatique, l'au moins une unité informatique étant apte à générer de manière automatique le texte d'une histoire à partir de la commande orale et étant apte à générer de manière automatique au moins une image. L'unité de commande étant en outre configurer pour commander le haut-parleur (10) pour émettre le son issu de la lecture d'un fichier audio généré par synthèse vocale du texte d l'histoire.

## Description

### Domaine technique

L'invention concerne le domaine des dispositifs éducatifs et ludiques à destination des enfants.

L'invention a plus particulièrement pour objet un dispositif interactif de contage d'histoire, un procédé de contage d'histoire, un produit programme, un support d'enregistrement informatique et un ensemble de contage d'histoire.

### État de l'art antérieur

Afin de rendre plus autonome les enfants et assister ou remplacer les parents dans l'activité de lecture d'histoire du soir afin de faciliter l'endormissement des enfants, il s'est développé ces dernières années des dispositifs de contage d'histoire. De tels dispositifs sont généralement des dispositifs dédiés à partir desquels l'enfant peut sélectionner une histoire afin qu'elle lui soit contée.

Généralement, ces dispositifs comprennent un nombre d'histoires limité et lorsque l'enfant souhaite renouveler les histoires stockées dans ces derniers, il est nécessaire d'aller les récupérer sur un site dédié. Il en résulte qu'en plus de nécessité une intervention des parents pour choisir les histoires à télécharger, l'enfant trouve son imagination bloquée par les histoires déjà présentes dans le dispositif. Cette limitation du nombre d'histoire disponible limite l'interactivité d'un tel dispositif et peut frustrer l'enfant qui trouve son imagination restreint aux seules histoires disponibles.

Ainsi, il y aurait besoin d'un dispositif de contage d'histoire qui soit plus interactif et qui permet à l'enfant de libérer son imagination.

### Exposé de l'invention

L'invention vise à remédier à l'inconvénient ci-dessus et a ainsi pour objet de fournir un dispositif de contage d'histoire qui soit plus interactif et qui permet à l'enfant utilisateur de pleinement exploiter son imagination mais aussi d'avoir un moyen d'exposer et de matérialiser des expériences passées, des craintes ou des souhaits quand les mots lui manquent.

L'invention concerne à cet effet un dispositif interactif de contage d'histoires comprenant :
- au moins un haut-parleur configuré pour émettre des sons,
- au moins un écran configuré pour fournir un affichage,
- un système de communication, préférentiellement sans fils, configuré pour communiquer avec au moins une unité informatique,
- une unité de commande configurée pour commander le haut-parleur et l'affichage de l'écran et pour se connecter à l'au moins une unité informatique au moyen du système de communication,

le dispositif interactif de contage d'histoires comprenant en outre un capteur apte à capturer des commandes orales émises par un utilisateur,
et en ce que l'unité de commande présente au moins une première configuration dans laquelle l'unité de commande est configurée pour :
   - récupérer à partir du capteur au moins une commande orale émises par l'utilisateur relatif à une histoire à conter,
   - transmettre l'au moins une commande orale à l'au moins une unité informatique, l'au moins une unité informatique étant apte à générer de manière automatique le texte d'au moins une partie d'histoire à partir de la commande orale, étant apte à générer de manière automatique au moins une image à partir du texte de l'au moins une partie d'histoire généré, et étant éventuellement apte à fournir un fichier audio généré par synthèse vocale du texte de l'au moins une partie d'histoire,
   - récupérer du texte de l'au moins une partie d'histoire et/ou de l'éventuel fichier audio généré par l'au moins une unité informatique et dans le cas de la récupération du texte de l'au moins une partie d'histoire, générer un fichier audio par synthèse vocale du texte de l'au moins une partie d'histoire récupérée,
   - récupérer auprès de l'au moins une unité informatique au moins une image générée automatiquement à partir du texte de l'au moins une partie d'histoire,
   - commander l'au moins un haut-parleur pour émettre le son issu de la lecture du fichier audio généré par synthèse vocale du texte de l'au moins une partie d'histoire et commander l'au moins un écran pour afficher l'au moins une image générée automatiquement à partir du texte de l'au moins une partie d'histoire.

Un tel dispositif permet de bénéficier de la génération automatique d'histoire permise par l'au moins une unité informatique pour permettre la lecture d'une histoire basée sur la commande orale de l'enfant. Ainsi, l'enfant est à même d'obtenir une histoire parfaitement adaptée à son envie du moment et qui ne soit limitée que par l'imagination de l'enfant (et les éventuelles instructions complémentaires des parents). De plus, l'interaction avec l'enfant est favorisée par l'utilisation de commande orale, l'enfant étant à même de pleinement exprimer ses envies sans avoir à passer par une sélection par écran ou par clavier qui n'est pas toujours aisé.

Le dispositif interactif de contage d'histoires peut comprendre en outre une mémoire apte à stocker des fichiers audio, ou du texte, et des images,
l'unité de commande présentant une deuxième configuration dans laquelle l'unité de commande est configurée pour désactiver le système de communication et le capteur et pour commander le haut-parleur pour émettre le son issu des fichiers audio ou de fichiers audio généré à partir d'une systhèse vocale du texte stockés dans la mémoire, et l'écran pour afficher au moins images stockées dans la mémoire, les fichiers audio ou texte et les images stockés dans la mémoire étant avantageusement des fichiers audio, ou du texte, et des images préalablement générés automatiquement par l'au moins une unité informatique à partir de commandes orales de l'utilisateur lorsque l'unité de commande était dans la première configuration.

De cette manière, lorsque l'unité de commande est dans sa deuxième configuration, l'utilisateur est à même de faire lire par le dispositif interactif de contage d'histoires une histoire sauvegardée dans la mémoire. Ainsi, dans une telle configuration le dispositif interactif de contage d'histoires n'a pas besoin de se connecter à l'au moins une unité informatique pour fonctionner et, en fonction des modalités de cette configuration, l'utilisateur est susceptible d'avoir accès aux histoires qu'il a préalablement générées et/ou appréciées.

Le dispositif interactif de contage d'histoires peut comprendre en outre au moins un système d'acquisition d'image adapté pour récupérer au moins une image,
l'unité de commande présentant au moins une troisième configuration dans laquelle elle configurée pour :
- récupérer au moins une image à partir de l'au moins un système d'acquisition d'image et éventuellement récupérer à partir du capteur au moins une commande orale optionnelle émise par l'utilisateur relative à une histoire à conter en relation avec l'image,
- transmettre à l'au moins une unité informatique l'au moins une image et, le cas échéant, l'au moins une commande orale optionnelle, l'au moins une unité informatique étant apte à :
   ∘ réaliser une reconnaissance d'image à partir de l'au moins une image afin de fournir une description textuelle de ladite au moins une image,
   ∘ générer de manière automatique le texte d'au moins une partie d'histoire à partir de la description textuelle et, le cas échéant, de l'au moins une commande orale optionnelle,
   ∘ générer de manière automatique au moins une image à partir du texte de l'au moins une partie d'histoire généré et de l'une parmi l'au moins une image et la description textuelle de ladite au moins une image,
   ∘ éventuellement fournir un fichier audio généré par synthèse vocale du texte de l'au moins une partie d'histoire,
- récupérer le texte de l'au moins une partie d'histoire et/ou de l'éventuel fichier audio généré par l'au moins une unité informatique et, dans le cas de la récupération unique du texte de l'au moins une partie d'histoire, générer un fichier audio par synthèse vocale du texte de l'au moins une partie d'histoire récupérée,
- récupérer auprès de l'au moins une unité informatique l'au moins une image générée automatiquement à partir du texte de l'au moins une partie d'histoire,
- commander l'au moins un haut-parleur pour émettre le son issu de la lecture du fichier audio généré par synthèse vocale du texte de l'au moins une partie d'histoire et commander l'au moins un écran pour afficher l'au moins une image générée automatiquement à partir du texte de l'au moins une partie d'histoire.

Avec une telle configuration, ceci en permettant à l'utilisateur, notamment un enfant, de générer une histoire à partir de la capture d'une scène de son environnement, l'utilisateur, même s'il ne sait pas parfaitement s'exprimer à l'orale, est à même de générer une histoire à partir cette scène qu'il aura préalablement construit. De cette façon, les jeunes enfants seront à même d'exploiter leur imagination pour générer les histoires sans avoir à l'exprimer à l'orale.

Le système d'acquisition d'image peut comprendre au moins l'un parmi :
- un capteur d'image, tel qu'un capteur CCD ou CMOS, apte à capturer une image dans l'environnement du dispositif interactif de contage d'histoire, le dispositif interactif de contage d'histoire pouvant comprendre en outre et de manière avantageuse un système de visé permettant une prévisualisation l'environnement du dispositif interactif de contage d'histoire avant la captation par le capteur d'image,
- un dispositif de pointage intégré ou associé à l'au moins un écran et apte à capturer le déplacement d'un élément, tel qu'un doigt ou un stylet, le long de l'au moins un écran et à fournir une image générée par ce déplacement,
- un module de récupération d'image, avantageusement intégré à l'unité de commande, et apte à récupérer, notamment au moyen du système de communication, une ou plusieurs image transmis par l'utilisateur au moyen d'un dispositif de communication personnel, tel qu'un mobile multifonction.

De tel système d'acquisition d'image favorise l'interaction de l'utilisateur avec le dispositif interactif de contage d'histoires selon l'invention.

L'unité de commande peut présenter au moins une troisième configuration pour la génération d'au moins un personnage récurrent, l'unité de commande étant configurée dans la troisième configuration pour :
- récupérer à partir du capteur au moins une commande orale de description d'un personnage émise par l'utilisateur et/ou une image relative audit personnage et d'une dénomination associée à ce personnage,
- soumettre l'au moins une commande orale de description d'un personnage et/ou l'image relative audit personnage à l'au moins une unité informatique de manière que cette dernière génère automatiquement au moins deux images alternatives basées sur l'au moins une commande orale de description d'un personnage et/ou l'image relative audit personnage,
- récupérer les au moins deux images alternatives générées par l'au moins une unité informatique,
- commander l'au moins un écran pour afficher les au moins deux images alternatives générées par l'au moins une unité informatique, cet affichage pouvant être concomitant ou par alternance,
- récupérer une instruction de l'utilisateur de l'image à retenir pour le personnage parmi les au moins deux images alternatives générées,
- associer selon l'instruction de l'utilisateur l'image à retenir et/ou un descriptif textuel correspondant à ladite image à retenir avec la dénomination,
dans lequel, lorsque l'unité de commande est dans la première configuration, l'unité de commande est en outre configurée pour, lors de la transmission de l'au moins une commande orale relative à une histoire à conter à l'au moins une unité informatique et de l'utilisation de la dénomination associée au personnage, transmettre le descriptif textuel et/ ou l'image à retenir de manière à intégrer le personnage illustré sur ladite image à retenir dans l'au moins une image générée automatiquement à partir du texte de l'au moins une partie d'histoire.

Avec une telle troisième configuration, l'utilisateur est à même de créer des personnages récurrents pour les histoires générées et ainsi obtenir une continuité dans les histoires qu'il va pouvoir générer avec le dispositif interactif de contage d'histoires. Une telle continuité lui permettra de fournir un attachement vis-à-vis de ce personnage qu'il créé et favorisera le plaisir à utiliser le dispositif compte tenu de cet attachement.

L'unité de commande peut comprendre au moins une quatrième configuration dans laquelle l'unité de commande est configurée pour :
- récupérer à partir du capteur au moins une commande orale émise par l'utilisateur qui est relative à une histoire à conter,
- transmettre l'au moins une commande orale à l'au moins une unité informatique, l'au moins une unité informatique étant apte à générer de manière automatique le texte d'au moins une partie d'histoire à partir de la commande orale,
- récupérer du texte de l'au moins une partie d'histoire,
- optionnellement récupérer auprès de l'au moins une unité informatique au moins une image générée automatiquement à partir du texte de l'au moins une partie d'histoire,
- commander l'au moins un écran pour afficher le texte de l'au moins une partie d'histoire de manière à permettre sa lecture et, de manière optionnelle, lorsque l'au moins une image générée automatiquement à partir du texte de l'au moins une partie d'histoire a été récupéré, ladite au moins une image générée automatiquement.

De cette manière, l'utilisateur, par exemple un parent d'un enfant, est à même de générer une histoire qu'il pourra lui-même lire à son enfant. Ainsi l'utilisateur peut bénéficier de la génération d'histoire offerte par le présent dispositif interactif de contage d'histoires tout en offrant à l'enfant la proximité que permet la lecture d'une histoire d'un parent à son enfant.

L'unité de commande peut être apte à communiquer avec un dispositif de communication personnel, tel qu'un mobile multifonction, et l'unité de commande peut présenter des paramètres configurables par ledit dispositif de communication personnel incluant avantageusement au moins l'un parmi :
- le choix d'une voix ou plusieurs voix à utiliser lors de la génération d'un fichier audio par synthèse vocale du texte de l'au moins une partie d'histoire récupérée, le choix de cette ou ces voix se faisant dans un groupe de voix incluant préférentiellement au moins une voix synthétisé à partir d'un enregistrement audio d'un utilisateur du dispositif interactif de contage d'histoire,
- un complément d'instructions à transmettre à l'unité de traitement lors de la transmission de l'au moins une commande orale émise par un utilisateur qui est relative à une histoire à conter, ledit complément pouvant être un thème de l'histoire à générer et/ou une indication relative à l'âge de l'utilisateur,
- un complément d'instructions de génération relatif à la génération d'au moins une image à transmettre à l'unité de traitement, ledit complément d'instructions de génération pouvant être un style d'image à générer,
- un nombre d'histoire maximal à générer pendant une période de temps donnée, la première configuration de l'unité de commande étant bloqué lorsque ce nombre d'histoire généré pendant la période de temps donnée est atteint,

- une sélection d'histoires favorites accessible par l'utilisateur.

De cette manière, un utilisateur, tel qu'un parent, est à même de personnaliser le fonctionnement du dispositif interactif de contage d'histoires ceci avec une interface particulièrement ergonomique puisqu'il s'agit de celle d'un dispositif de communication personnel, tel qu'un mobile multifonction.

L'unité de commande peut comprendre au moins une cinquième configuration dans laquelle l'unité de commande est configurée pour :
- récupérer à partir du capteur au moins une commande orale de génération d'une comptine et/ou une image relative à la génération d'une telle comptine,
- transmettre l'au moins une commande orale de génération d'une comptine et/ou une image relative à la génération d'une telle comptine à l'au moins une unité informatique, l'au moins une unité informatique étant apte à générer de manière automatique le texte d'au moins une comptine à partir de la commande orale de génération d'une comptine et/ou une image relative à la génération d'une telle comptine, et étant éventuellement apte à fournir un fichier audio généré par synthèse vocale du texte de l'au moins une comptine à partir du texte de l'au moins une comptine généré de manière automatique,
- récupérer le texte de l'au moins une comptine généré de manière automatique et/ou de l'éventuel fichier audio généré par l'au moins une unité informatique et, dans le cas de la récupération unique du texte de l'au moins une comptine, générer un fichier audio par synthèse vocale du texte de l'au moins une comptine généré de manière automatique,
- commander l'au moins un haut-parleur pour émettre le son issu de la lecture du fichier audio généré par synthèse vocale du texte de l'au moins une comptine généré de manière automatique.

De cette manière l'utilisateur est à même de générer une comptine à partir du dispositif interactif de contage d'histoire.

L'invention concerne en outre un procédé interactif de contage d'histoire comprenant les étapes suivantes :
A. Récupération d'au moins une commande orale émise par un utilisateur qui est relative à une histoire à conter,
B. Transmission de l'au moins une commande orale relative à une histoire à conter à l'au moins une unité informatique, l'au moins une unité informatique étant apte à générer de manière automatique le texte d'au moins une partie d'histoire à partir de la commande orale relative à une histoire à conter, étant apte à générer de manière automatique au moins une image à partir du texte de l'au moins une partie d'histoire généré, et étant éventuellement apte à fournir un fichier audio généré par synthèse vocale du texte de l'au moins une partie d'histoire,
C. récupération du texte de l'au moins une partie d'histoire et/ou de l'éventuel fichier audio généré par l'au moins une unité informatique et dans le cas de la récupération du texte de l'au moins une partie d'histoire, génération un fichier audio par synthèse vocale du texte de l'au moins une partie d'histoire récupérée,
D. récupération auprès de l'au moins une unité informatique au moins une image générée automatiquement à partir du texte de l'au moins une partie d'histoire,
E. commande de l'au moins un haut-parleur pour émettre le son issu de la lecture du fichier audio généré par synthèse vocale du texte de l'au moins une partie d'histoire et commande d'un écran pour afficher l'au moins une image générée automatiquement à partir du texte de l'au moins une partie d'histoire.

Un tel procédé permet la génération d'histoire selon le principe mise en oeuvre par le dispositif selon l'invention et de bénéficier des avantages afférents.

L'invention concerne en outre un produit programme d'ordinateur comprenant du code information configuré pour mettre en oeuvre les étapes d'un procédé interactif de contage d'histoire selon l'invention lorsqu'il est exécuté sur un ordinateur.

Un tel produit programme permet la mise en oeuvre d'un procédé selon l'invention et de bénéficier des avantages qui y sont associés.

L'invention concerne en outre un support d'enregistrement informatique lisible par un ordinateur stockant le produit-programme selon l'invention.

Un tel support de stockage permet de lancer le produit programme selon l'invention sur un ordinateur, ou équivalent tel que le dispositif interactif de contage d'histoire selon l'invention, et de bénéficier des avantages associés à un tel programme.

L'invention concerne en outre un ensemble de contage d'histoire comprenant :
- un dispositif interactif de contage d'histoire selon l'invention,
- Au moins une unité informatique, ladite au moins une unité informatique étant apte à générer de manière automatique le texte d'une histoire à partir d'au moins une commande orale fournie par le dispositif interactif de contage d'histoire, étant apte à générer de manière automatique au moins une image à partir du texte de l'histoire généré
- , et étant éventuellement apte à fournir un fichier audio généré par synthèse fichier vocale de l'au moins une partie d'histoire.

Un tel ensemble de contage d'histoire permet la mise en oeuvre d'un dispositif interactif de contage d'histoire et de bénéficier des avantages associés.

L'au moins une unité informatique peut être configurée pour, lors de la génération automatique d'au moins une partie d'histoire, différencier les portions d'histoire relatif à au moins deux personnages dont avantageusement l'un est un narrateur de l'histoire et l'au moins un autre est un personnage de l'histoire,
dans lequel lors de la génération un fichier audio par synthèse vocale du texte de l'au moins une partie d'histoire par l'un du dispositif interactif de contage d'histoire et de l'au moins une unité informatique, la synthèse vocale utilise pour chaque portion d'histoire une voix qui est respective au personnage associé à ladite portion d'histoire.

De cette manière, en associant plusieurs voix au contage de l'histoire, un tel ensemble rend la lecture par le dispositif interactif de contage d'histoire de l'histoire générée plus immersive.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement un dispositif interactif de contage d'histoires selon l'invention,
- la figure 2 illustre un ensemble de contage d'histoire selon l'invention comprenant un dispositif interactif de contage d'histoires tel qu'illustré sur la figure 1 et une unité informatique,
- la figure 3 illustre l'affichage du dispositif interactif de contage d'histoire dans le cadre du choix d'une histoire générée à partir d'une commande orale et/ou de fourniture d'une image,
- la figure 4 illustre l'affichage du dispositif interactif de contage d'histoire dans le cadre de la génération d'un personnage récurent,
- la figure 5 illustre l'affichage du dispositif interactif de contage d'histoire dans le cadre du choix d'une histoire parmi une sélection d'histoires générées aléatoirement, et
- la figure 6 illustre l'affichage d'un dispositif interactif de contage d'histoire dans le cadre d'une configuration « livre dont vous êtes le héros »,
- la figure 7 illustre un ordinogramme des étapes mise en oeuvre par une unité de commande du dispositif interactif de contage d'histoire ceci dans une première configuration de l'unité de traitement,
- la figure 8 illustre un ordinogramme des étapes mise en oeuvre par une unité de commande du dispositif interactif de contage d'histoire ceci dans une troisième configuration de l'unité de traitement, et
- la figure 9 illustre un ordinogramme des étapes mise en oeuvre par une unité de commande du dispositif interactif de contage d'histoire ceci dans une quatrième configuration de l'unité de traitement.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

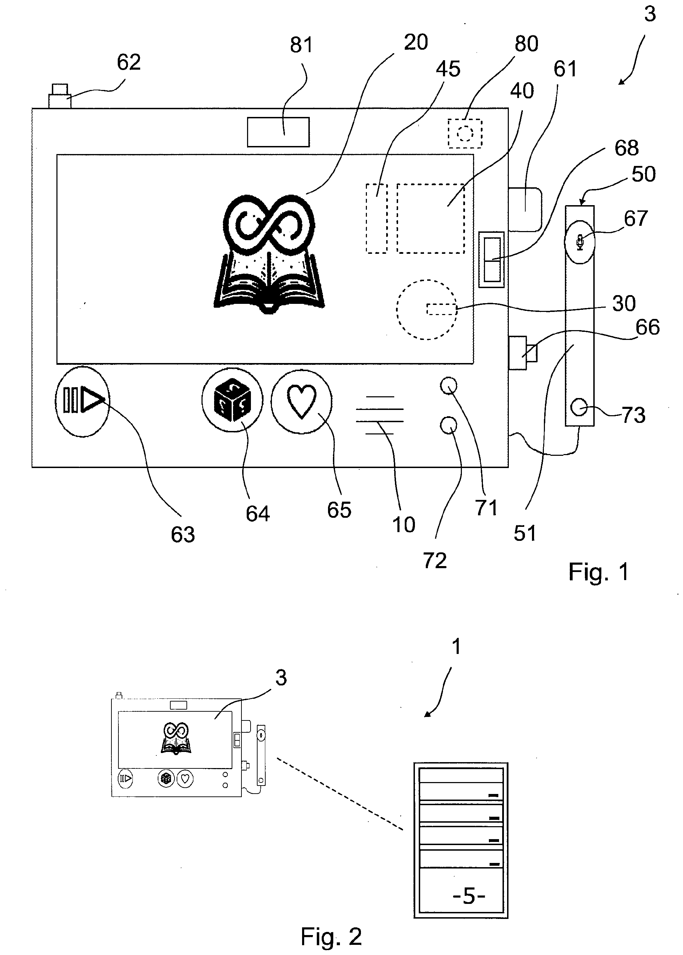

La figure 1 illustre un dispositif de contage d'histoires 1 adapté pour permettre une génération automatique d'histoire à partir d'une commande d'un utilisateur.

On notera que dans le présent document, l'utilisateur du dispositif de contage d'histoires 1 peut aussi bien être un enfant qui manipule le dispositif de contage d'histoires 1 pour se faire conter une histoire, l'un des parents qui soit configure le dispositif de contage d'histoires 1 pour son utilisation par son enfant, ou utilise le dispositif afin qu'une histoire soit contée à son enfant ou, d'une manière moins usuel un autre type d'utilisateur, tel qu'un enseignant de petite section ou une garde d'enfants souhaitant conter des histoires à ses élèves et/ou les enfants gardés. Ainsi, dans la suite, même si certaine des fonctions du dispositif de contage d'histoires 1 sont particulièrement dédiées à un type d'utilisateur, il a été gardé le terme générique d'utilisateur par simplification (le réel utilisateur auquel est destiné lesdites fonctions découlant, sans mention explicite, du contexte).

Dans le cadre du présent mode de réalisation, le dispositif interactif de contage d'histoires 3 comprend :
- au moins un haut-parleur 10 configuré pour émettre des sons,
- au moins un écran 20 configuré pour fournir un affichage,
- un système de communication 30, préférentiellement sans fils, configuré pour communiquer avec un serveur informatique 5 ; telle que montrée sur la figure 2,
- une unité de commande 40 configurée pour commander le haut-parleur et l'affichage de l'écran et pour se connecter au serveur informatique 5 au moyen du système de communication 30,
- une mémoire 45 apte à stocker des fichiers audio, ou du texte, et des images,
- un microphone 50 apte à capturer des commandes orales émises par un utilisateur, ledit microphone 50 étant agencé sur un accessoire dédié 51 afin de permettre une prise en main partielle indépendante du reste du le dispositif de contage d'histoires 1,
- des éléments d'interaction homme-machine 61, 62, 63, 64, 65, 66, 67, 68, notamment du type mécanique, pour permettre une interaction de l'utilisateur avec le dispositif de contage d'histoires 1,
- des éléments d'affichage d'activité 71, 72, 73 sous la forme de diodes électroluminescentes,
- un capteur d'image 80, tel qu'un capteur CCD ou CMOS, apte à capturer une image dans l'environnement du dispositif interactif de contage d'histoire 3, le dispositif interactif de contage d'histoire 3 comprenant en outre et de manière avantageuse un système de visé, ici un oeilleton 81, permettant une prévisualisation l'environnement du dispositif interactif de contage d'histoire avant la captation par le capteur d'image 80.

Plus spécifiquement, le dispositif interactif de contage d'histoires 3 comprend un premier élément d'interaction homme-machine 61 formé par un potentiomètre avec interrupteur marche arrêt afin d'offrir à fois une fonction d'interrupteur marche-arrêt et une fonction de réglage du volume sonore du dispositif interactif de contage d'histoires 3. Ainsi lorsque l'utilisateur, tel qu'un enfant ou son parent souhaite mettre en marche le présent dispositif, il peut le faire en tournant simplement le premier élément d'interaction homme-machine 61 et en réglant ainsi le volume sonore de la lecture de l'histoire.

Avec une telle configuration, l'actionnement du premier élément d'interaction homme-machine 61 permet d'alimenter le dispositif interactif de contage d'histoires 3 et notamment son unité de commande 40. L'utilisateur peut alors, à partir des autres éléments d'interaction homme-machine 62, 63, 64, 65, 66, 67, 68 choisir la configuration de l'unité de commande 40.

On notera qu'afin de permettre la mise en oeuvre du dispositif interactif de contage d'histoires 3, outre ses différentes configurations, l'unité de commande 40 est apte à se connecter, au moyen système de communication 30, à l'au moins une unité informatique 5. De manière avantageuse et comme cela est le cas dans le présent mode de réalisation, le système de communication 30 est un système de communication 30 sans fil, tel qu'un système de communication wifi et/ou Bluetooth et est à même de se connecter à un réseau informatique, tel que le réseau internet, afin de pouvoir se connecter à l'au moins une unité informatique 5. En alternative non illustrée, le système de communication 30 peut être également filaire ou uniquement filaire en comportant un port apte à la connexion d'un câble de communication tel qu'un câble Ethernet ou USB^{™}.

Comme précisé ci-dessus, dans le cadre du présent mode de réalisation, l'unité de commande 40 comprend plusieurs configurations :
- une première configuration de génération d'histoires et de lecture de cette dernière par le dispositif interactif de contage d'histoire,
- une deuxième configuration de lecture d'histoires préalablement enregistrées dans la mémoire 45,
- une troisième configuration de génération d'histoire à partir de l'acquisition d'une image,
- une quatrième configuration de génération de personnages récurrents,
- une cinquième configuration dans laquelle le dispositif interactif de contage d'histoire 3 est configuré pour permettre la lecture par un utilisateur du texte de l'histoire généré,
- une sixième configuration de génération de comptine.

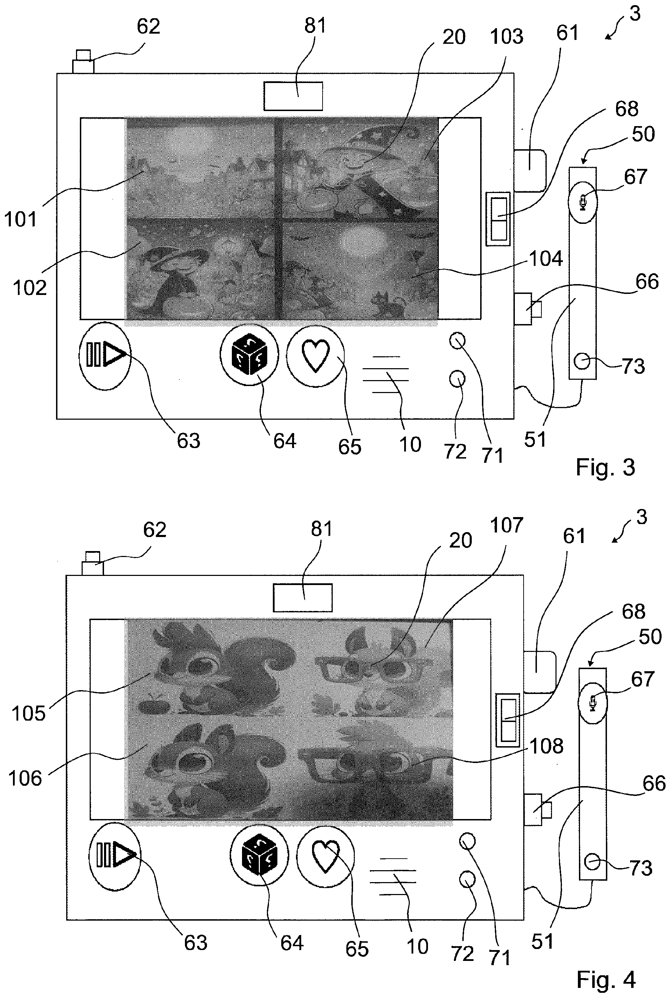

Dans le cadre de la première configuration, l'unité de commande 40 est configurée pour récupérer à partir du capteur 50 au moins une commande orale émise par l'utilisateur qui est relative à l'histoire à conter,
- transmettre l'au moins une commande orale au serveur informatique 5, le serveur informatique 5 étant apte à générer de manière automatique le texte de l'histoire à partir de la commande orale, étant apte à générer de manière automatique au moins une image 101, 102, 103, 104, telles que celles illustrées sur la figure 3, à partir du texte de l'histoire généré, et étant apte à fournir un fichier audio généré par synthèse vocale du texte de 'histoire,
- récupérer le fichier audio généré par le serveur informatique 5,
- récupérer auprès du serveur informatique 5 au moins une image 101, 102, 103, 104 générée automatiquement à partir du texte de l'au moins une partie d'histoire,
- commander le haut-parleur 10 pour émettre le son issu de la lecture du fichier audio généré par synthèse vocale du texte de l'au moins une partie d'histoire et commander l'écran 20 pour afficher l'au moins une image 101, 102, 103, 104 générée automatiquement à partir du texte de l'au moins une partie d'histoire.

On notera que si dans le présent mode de réalisation, l'unité de commande 40 n'est pas apte à effectuer une synthèse vocale, cette fonction étant donc fournie par le serveur informatique 5, il est bien entendu envisageable, en variante, que l'unité de commande 40 soit elle-même configurer pour fournir une telle fonction. Dans ces conditions :
- lors de la transmission de la commande orale, le serveur informatique 5 peut alors être apte à générer de manière automatique le texte d'au moins une partie d'histoire à partir de la commande orale et à générer de manière automatique au moins une image 101, 102, 103, 104, telles qu'illustré sur la.figure 3, à partir du texte de l'au moins une partie d'histoire généré,
- lors de la récupération, l'unité de commande récupère uniquement le texte de l'au moins une partie de l'histoire en lieu et place du fichier audio, et génère le fichier audio par synthèse vocale du texte de l'histoire récupérée auprès du serveur informatique.

La figure 3 illustre un exemple d'une telle mise en oeuvre du dispositif interactif de contage d'histoires 3. En effet dans ce cadre-là, l'utilisateur a transmis au dispositif interactif de contage d'histoires 3 la commande orale de générer une histoire ayant pour objet halloween. Conformément à l'invention, cette commande orale de génération d'une histoire portant sur halloween a été transmis au serveur informatique 5. Cette transmission peut se faire soit sous forme d'un fichier audio, le serveur informatique 5 étant alors apte à faire une reconnaissance vocale (ou reconnaissance automatique de la parole) sur ce fichier audio, soit sous forme d'une requête textuelle basée sur la commande, l'unité de commande étant apte à réaliser une telle reconnaissance vocale sur la commande orale enregistrée à partir du microphone 50.

Conformément à l'invention, à partir de ladite commande orale, transmise au serveur informatique 5 par exemple sous la forme d'un fichier audio ou sous la forme d'une requête textuelle définie à partir de la commande orale, le serveur informatique peut générer de manière automatique le texte de l'histoire portant sur halloween. Dans le cadre du présent mode de réalisation, le serveur informatique génère de manière automatique le texte de quatre histoires différentes basées sur la commande orale de génération d'une histoire portant sur halloween. Le serveur informatique 5 utilise également le texte de ces quatre histoires afin de générer de manière automatique une image associée à chacune de ces histoires. Ces quatre histoires sont alors soumises à l'utilisateur par l'intermédiaire de l'écran 20, comme cela est montré sur la figure 3 afin qu'il choisisse l'histoire dont il souhaite la lecture. Une fois l'histoire choisie par l'utilisateur, le choix de l'utilisateur est transmis par le dispositif interactif de contage d'histoires 3 au serveur informatique 5.

Le serveur informatique 5 effectue une synthèse vocale du texte de l'histoire choisie par l'utilisateur afin de générer un fichier audio correspondant au texte de l'histoire choisie et génère de manière automatique une pluralité d'images chacune associé à des portions du texte de l'histoire choisi. Le dispositif interactif de contage d'histoires 3 récupère le fichier audio issue de synthèse vocale du texte de l'histoire choisie et les images générées. Une fois récupéré, l'unité de commande 40 est donc configurée pour commander le haut-parleur 10 pour émettre le son issu de la lecture du fichier audio généré par synthèse vocale du texte de l'histoire choisie et commander l'écran 20 pour afficher les images générées automatiquement.

Dans le cadre de la deuxième configuration, l'unité de commande 40 est configurée pour désactiver le système de communication 30 et le capteur 50 et pour commander le haut-parleur 10 pour émettre le son issu de fichiers audio stockés dans la mémoire 45 et l'écran 20 pour afficher au moins images stockées dans la mémoire.

Dans cette deuxième configuration de l'unité de commande 40, les fichiers audio et les images stockés dans la mémoire 45 peuvent être :
- des fichiers audio et des images préalablement générés automatiquement par l'au moins le serveur informatique 5 à partir de commandes orales de l'utilisateur lorsque l'unité de commande 40 était dans la première configuration (ou comme cela est décrit plus après, dans la troisième configuration) ;
- des fichiers audio et des images téléchargés par l'utilisateur directement à partir de l'écran du dispositif interactif de contage d'histoires 3 ou d'un dispositif de communication personnel, tel qu'un mobile multifonction.

Une telle configuration permet d'assurer un bon fonctionnement du dispositif interactif de contage d'histoires 3 en l'absence de connexion, par exemple en voyage, ou lorsque utilisateur, ou un de ses relatifs, tels que l'un de ses parents, souhaite réduire l'exposition de l'utilisateur aux rayonnements électrogéniques dans le cadre de l'utilisation du dispositif interactif de contage d'histoires 3.

Pour ce faire, l'unité de commande 40, dans cette deuxième configuration peut afficher une liste des histoires stockées chacune associée avec une image représentative de cette histoire. L'utilisateur peut alors sélectionner dans cette liste l'histoire qu'il souhaite qu'on lui conte et l'unité de commande lance alors la lecture du fichier audio correspondant en affichant sur l'écran 50 les images qui y sont associées.

On note que si dans le présent mode de réalisation et dans le cadre de cette deuxième configuration de l'unité de commande, la mémoire stocke des fichiers audio en association avec des images, en variante, dans le cas où l'unité de commande 40 est apte à réaliser une synthèse vocale à partir du texte d'une histoire, il peut être stocké, en lieu et place desdits fichiers audio, des fichiers texte (éventuellement enrichis) en association avec des images ceci sans que l'on sorte du cadre de l'invention.

Dans le cadre de sa troisième configuration, l'unité de commande 40 est configurée pour :
- récupérer au moins une image à partir du capteur d'image 80, cette image pouvant être éventuellement complétée par la récupération à partir du microphone 50 d'une commande orale optionnelle émise par l'utilisateur relative à l'histoire à conter en relation avec l'image,
- transmettre au serveur informatique 5 l'au moins une image et, le cas échéant, la commande orale optionnelle, le serveur informatique 5 étant apte à :
   ∘ réaliser une reconnaissance d'image à partir de l'au moins une image afin de fournir une description textuelle de ladite au moins une image,
   ∘ générer de manière automatique le texte de l'histoire à partir de la description textuelle et, le cas échéant, de la commande orale optionnelle,
   ∘ générer de manière automatique au moins une image à partir du texte de l'histoire généré et de l'une parmi l'au moins une image et de la description textuelle de ladite au moins une image,
   ∘ fournir un fichier audio généré par synthèse vocale du texte de l'histoire,
- récupérer du fichier audio généré par le serveur informatique 5,
- récupérer auprès du serveur informatique 5 l'au moins une image générée automatiquement à partir du texte de l'histoire,
- commander l'au moins un haut-parleur 50 pour émettre le son issu de la lecture du fichier audio généré par synthèse vocale du texte de l'histoire et commander l'au moins un écran pour afficher l'au moins une image générée automatiquement à partir du texte de l'histoire.

Si dans le présent mode de réalisation, la récupération de l'image se fait à partir du capteur d'image 80, en variante ou en complément, la récupération d'image peut se faire à partir d'un autre système d'acquisition d'image tel que :
- un dispositif de pointage intégré ou associé à l'écran 20 et apte à capturer le déplacement d'un élément, tel qu'un doigt ou un stylet, le long de l'écran 20 et à fournir une image générée par ce déplacement,
- un module de récupération d'image, non illustré et avantageusement intégré à l'unité de commande 30, et apte à récupérer, notamment au moyen du système de communication 30, une ou plusieurs image transmis par l'utilisateur au moyen d'un dispositif de communication personnel, tel qu'un mobile multifonction.

De même, si bien entendu, dans le présent mode de réalisation, il n'est décrit que la récupération d'une seule image à partir du capteur d'image 80, il est bien entendu parfaitement envisageable que l'utilisateur prenne plusieurs images afin de les utiliser pour la génération de l'histoire.

Comme pour la première et la deuxième configuration, dans le cas où l'unité de commande 40 est apte à réaliser une synthèse vocale à partir du texte d'une histoire, le serveur informatique 5 peut ne pas fournir de fichier audio généré par synthèse vocale du texte de l'histoire et l'unité de commande peut récupérer le texte de l'histoire en lieu et place du fichier audio. De cette manière, l'unité de commande 40 peut générer elle-même le fichier audio par synthèse vocale du texte de l'histoire récupéré.

Dans le cadre de la quatrième configuration relative à la génération de personnages récurrents qui est illustré sur la figure 4, l'unité de commande 40 est configurée pour :
- récupérer à partir du microphone 50 au moins une commande orale de description d'un personnage émise par l'utilisateur et/ou à partir du capteur d'image 80 une image relative audit personnage, et d'une dénomination associée à ce personnage,
- soumettre l'au moins une commande orale de description d'un personnage et/ou l'image relative audit personnage au serveur informatique 5 de manière que cette dernière génère automatiquement de quatre images 105, 106, 107, 108 alternatives basées sur l'au moins une commande orale de description d'un personnage et/ou l'image relative audit personnage,
- récupérer les quatre images 105, 106, 107, 108 alternatives générées par le serveur informatique 5,
- commander l'écran 20 pour afficher les quatre images 105, 106, 107, 108 alternatives générées par le serveur informatique 5, cet affichage pouvant être concomitant ou par alternance,
- récupérer une instruction de l'utilisateur de l'image à retenir pour le personnage parmi les quatre images 105, 106, 107, 108 alternatives générées,
- associer selon l'instruction de l'utilisateur un descriptif textuel correspondant à ladite image à retenir la dénomination.

L'unité de commande 40,lorsqu'elle est dans l'une de la première, deuxième, cinquième ou sixième configuration, est en outre configurée pour lors de la transmission d'une commande orale relative à une histoire à conter ou d'une comptine à chanter au serveur informatique 5 incorporant la dénomination associée au personnage, transmettre le descriptif textuel de manière à permettre d'intégrer le personnage illustré sur ladite image à retenir dans l'au moins une image générée automatiquement à partir du texte de l'histoire. Plus spécifiquement et de manière préférentielle, ce descriptif textuel est également utilisé pour la génération du texte de l'histoire et/ou de la comptine ceci en association avec la dénomination.

Ainsi, la figure 4 illustre le principe d'une telle génération d'histoire permise par la quatrième configuration de l'unité de commande 40. Dans ce cadre l'utilisateur a, alors que l'unité de commande est dans la quatrième configuration, émis la commande de générer un personnage dénommé « Arnold » et décrit ce personnage comme un « écureuil intelligent et mignon ». Sur cette base, l'unité de commande a soumis la description du personnage au serveur informatique 5, c'est-à-dire la génération d'un personnage automatique d'un personnage qui est un écureuil intelligent et mignon, et le serveur informatique 5 a généré de manière automatique quatre images en correspondance à cette commande. Ces quatre images ont en ensuite été affichées par l'écran 20 sous la commande de l'unité de commande 40 afin que l'utilisateur puisse choisir l'image qui correspond au mieux au personnage « Arnold ». Après récupération du choix de l'utilisateur, l'unité de commande peut alors associer l'image choisie ou un descriptif associé à celle-ci, par exemple fourni par le serveur informatique 5, à la dénomination de personnage « Arnold ». Ainsi, lorsque l'utilisateur utilise dans l'une de ses commandes de génération d'histoire (ou d'une comptine) la dénomination Arnold, l'image et/ou le descriptif associé est également transmis au serveur pour que l'histoire et les images qui seront générées de manière automatique incorporent un personnage nommé « Arnold » qui est un écureuil intelligent et mignon selon l'image choisie parmi les images 105, 106, 107, 108.

Conformément au présent mode de réalisation, dans le cadre de sa cinquième configuration dédiée à la lecture par l'utilisateur d'une histoire générée de manière automatique, l'unité de commande 40 est configurée pour :
- récupérer à partir du microphone 50 au moins une commande orale émise par l'utilisateur qui est relative à une histoire à conter,
- transmettre l'au moins une commande orale au serveur informatique 5, le serveur informatique 5 étant apte à générer de manière automatique le texte d'une d'histoire à partir de la commande orale,
- récupérer du texte de l'histoire généré,
- récupérer, auprès du serveur informatique 5, au moins une image générée automatiquement à partir du texte de l'histoire,
- commander l'écran 20 pour afficher le texte de l'histoire de manière à permettre sa lecture et, la ou les images générées automatiquement à partir du texte de l'histoire récupérée auprès du serveur informatique 5.

Bien entendu, l'unité de commande 40 peut être configurée pour tenir compte de la taille de l'écran et ainsi n'afficher qu'une partie du texte de l'histoire à l'écran 20, le passage d'une partie du texte à la partie du texte qui la succède pouvant se faire par exemple par un défilement du texte ou par une substitution de ladite portion du texte affichée à l'écran par la portion du texte qui la succède. Dans le cadre de cette substitution et de l'affichage d'images générées, cette substitution peut également permettre une substitution de l'image générée affichée.

Conformément au présent mode de réalisation, dans le cadre de sa sixième configuration dédiée à la génération de de comptine, l'unité de commande 40 est configurée pour :
- récupérer à partir du microphone 50 une commande orale de génération d'une comptine et/ou une image relative à la génération d'une telle comptine,
- transmettre la commande orale de génération d'une comptine et/ou l'image relative à la génération d'une telle comptine à le serveur informatique 5, le serveur informatique 5 étant apte à générer de manière automatique le texte de la comptine à partir de la commande orale de génération d'une comptine et/ou de l'image relative à la génération d'une telle comptine, et étant apte à fournir un fichier audio généré par synthèse vocale du texte de la comptine à partir du texte de la comptine généré de manière automatique,
- récupérer le fichier audio généré par le serveur informatique 5,
- commander l'au moins un haut-parleur 10 pour émettre le son issu de la lecture du fichier audio généré par synthèse vocale du texte de la comptine généré de manière automatique.

Bien entendu, lors de la génération du fichier audio à partir du texte de la comptine, le serveur informatique 5 est avantageusement configuré fournir un fichier audio généré par synthèse vocale du texte de la comptine à partir du texte de la comptine généré de manière automatique en ajoutant un rythme à cette lecture et éventuellement un fond sonore en adéquation avec ce rythme. De même, afin de fournir une illustration à la comptine, d'une manière identique au première et troisième configuration, le serveur informatique 5 peut également générer des images à partir du texte de de la comptine générée de manière automatique. Ces images peuvent être ainsi être affichées en même temps que la lecture du fichier audio et d'un éventuel affichage du texte afin de permettre à l'utilisateur d'accompagner la lecture du fichier audio en chantant ce texte en tant que parole de la comptine.

De même, de manière alternative, l'unité de commande 40 pouvant être apte à réaliser une synthèse vocale à partir du texte d'une histoire, le serveur informatique 5 peut ne pas fournir de fichier audio généré par synthèse vocale du texte de l'histoire et l'unité de commande peut récupérer le texte de l'histoire en lieu et place du fichier audio. De cette manière, l'unité de commande 40 peut générer elle-même le fichier audio par synthèse vocale du texte de l'histoire récupéré.

En complément à ces différentes configurations, l'unité de commande 40 comprend dans le présent mode de réalisation des configurations supplémentaires incluant une première configuration supplémentaire de génération d'histoires aléatoire, une deuxième configuration supplémentaire de génération d'histoire du type « livre dont vous êtes le héros » et une troisième configuration d'enregistrement de la voix d'un utilisateur afin de permettre son utilisation dans le cadre de la synthèse vocale du texte de l'histoire généré.

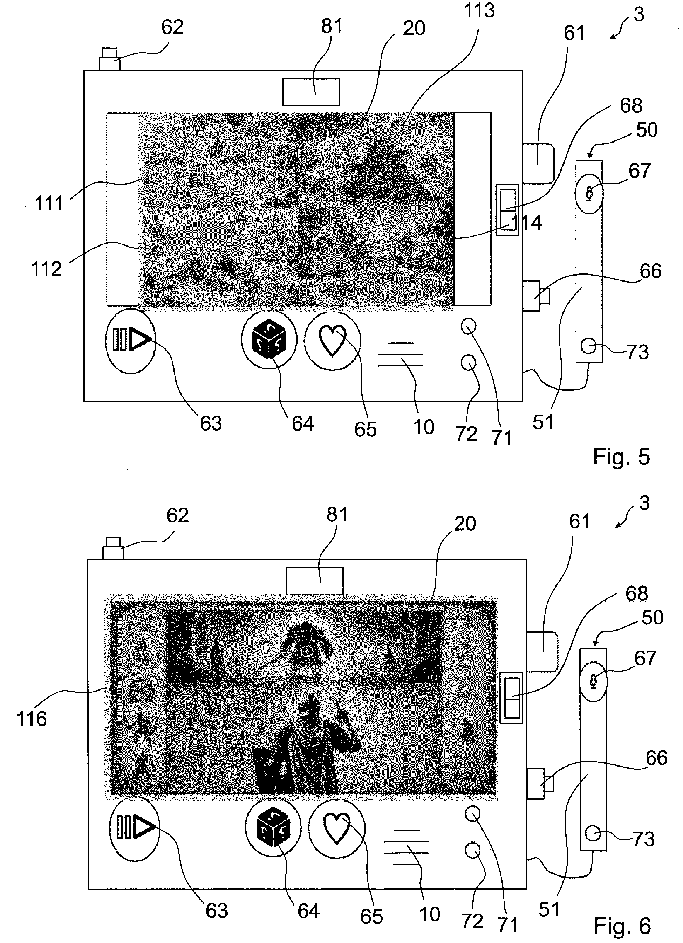

Dans la première configuration supplémentaire, dont la mise en oeuvre est illustrée par la figure 5, d'une manière identique à la première configuration, l'unité de commande 40 peut transmettre la commande au serveur informatique 5 de générer quatre histoires aléatoires. Cette génération est avantageusement guidée par des instructions préalablement données par l'utilisateur, par exemple dans le cadre d'une configuration du dispositif interactif de contage d'histoires 3, ou par un historique d'histoires générées lors d'utilisations précédentes du dispositif interactif de contage d'histoires 3.

Dans cette première configuration supplémentaire du présent mode de réalisation, l'unité de commande 40 peut ainsi être configurée pour :
- transmettre la commande au serveur informatique 5 de générer de manière automatique le texte de l'histoire, étant apte à générer de manière automatique au moins une image 111, 112, 113, 114, telles que celles illustrées sur la figure 5, à partir du texte de l'histoire généré, et étant apte à fournir un fichier audio généré par synthèse vocale du texte de 'histoire,
- récupérer le fichier audio généré par le serveur informatique 5,
- récupérer auprès du serveur informatique 5 au moins une image 111, 112, 113, 114 générée automatiquement à partir du texte de l'au moins une partie d'histoire,
- commander le haut-parleur 10 pour émettre le son issu de la lecture du fichier audio généré par synthèse vocale du texte de l'au moins une partie d'histoire et commander l'écran 20 pour afficher l'au moins une image 111, 112, 113, 114 générée automatiquement à partir du texte de l'au moins une partie d'histoire.

Plus spécifiquement et comme cela a été décrit dans le cadre de la première configuration de l'unité de commande 40, le serveur informatique 5 génère de manière automatique le texte de quatre histoires différentes aléatoire, ici une première basée sur des enfants jouant dans le jardin d'un château, une concernant un enfant plongé dans un livre et laissant cours à son imagination, une autre concernant un ménestrel et une dernière concernant des enfants autour d'une fontaine à voeux. Cette phase de génération d'histoires aléatoire peut avantageusement être réalisée sur la base de conditions préétablies par l'utilisateur (notamment un parent), l'utilisateur pouvant spécifier un âge de l'enfant auquel sont destiné les histoires, le sexe de cet enfant ou encore un ou plusieurs thèmes préférés. Une fois le texte des quatre histoires généré, le serveur informatique 5 utilise également le texte de ces quatre histoires afin de générer de manière automatique une image 111, 112, 113, 114 associée à chacune de ces histoires. Ces quatre histoires sont alors soumises à l'utilisateur par l'intermédiaire de l'écran 20, comme cela est montré sur la figure 5 afin qu'il choisisse l'histoire dont il souhaite la lecture. Une fois l'histoire choisie par l'utilisateur, le choix de l'utilisateur est transmis par le dispositif interactif de contage d'histoires 3 au serveur informatique 5.

Le serveur informatique 5 effectue une synthèse vocale du texte de l'histoire choisie par l'utilisateur afin de générer un fichier audio correspondant au texte de l'histoire choisie et génère de manière automatique une pluralité d'images chacune associé à des portions du texte de l'histoire choisi. Le dispositif interactif de contage d'histoires 3 récupère le fichier audio issu de synthèse vocale du texte de l'histoire choisie et les images générées. Une fois récupéré, l'unité de commande 40 est donc configurée pour commander le haut-parleur 10 pour émettre le son issu de la lecture du fichier audio généré par synthèse vocale du texte de l'histoire choisie et commander l'écran 20 pour afficher les images générées automatiquement.

Dans le cadre de la deuxième configuration supplémentaire, l'unité de commande 40 est configurée pour transmettre la commande au serveur informatique 5 de générer des parties d'histoire basée pour une part sur une première commande orale originale de l'utilisateur de générer une histoire du type « livre dont vous êtes le héros » et sur une autre part des commandes/choix de l'utilisateur répondant aux parties d'histoire préalablement contées et l'invitant à faire des choix. Bien entendu, afin de rendre l'histoire plus interactive et aléatoire, comme il est d'usage dans les livres du type « livres dont vous êtes le héros, l'unité peut simuler, par exemple par l'affichage du résultat d'un jet de dés sur l'écran 20, de l'aléatoire ceci notamment dans le cadre de simulation de combat. Bien entendu, une telle simulation de livres du type « dont vous êtes le héros » permise par une telle deuxième configuration supplémentaire avec un dispositif interactif de contage d'histoires 3 et les possibilités de génération automatique de partie d'histoire telles qu'offertes par l'invention peut être réalisée de manière différente que celle explicitée ci-dessous ceci sans que l'on sorte du cadre de l'invention.

On notera que pour cette deuxième configuration, il peut avantageusement être prévu un mode de configuration du personnage de l'utilisateur, l'utilisateur pouvant choisir une dénomination de son personnage, une race de ce personnage, son genre et son type et éventuellement du type d'histoire/donjon/quête. Il peut également être prévu des règles de fonctionnement du mode livres du type « dont vous êtes le héros, telles qu'une fin qui se termine soit par l'achèvement du donjon ou de la quête (et de la découverte d'une récompense associée) soit par la défaite (généralement la mort du personnage.

Dans le cadre de la troisième configuration supplémentaire et afin de de permettre l'enregistrement de la voix d'un utilisateur en vue de son utilisation dans le cadre de la synthèse vocale de textes d'histoires générés, l'unité de commande 40 est configurée pour :
- demander à l'utilisateur d'utiliser le microphone 50 pour lire certains mots, expressions et/ou phrase près sélectionnés pour permettre la capture de la voix l'utilisateur dans le cadre de la synthèse vocale,
- transmettre des enregistrement du ou des fichiers audio issu de cette capture au serveur informatique 5, le serveur informatique étant apte à extraire d'informations caractéristiques de la voix de l'utilisateur à partir de ces fichiers audio afin de permettre l'utilisation de cette voix dans le cadre de de la synthèse vocale de textes d'histoires générés.

Une fois ces d'informations caractéristiques de la voix de l'utilisateur extraites, ces informations peuvent être soit stockées par le serveur informatique 5, soit dans la mémoire du dispositif interactif de contage d'histoires 3 afin d'être utilisées dans le cadre de future synthèse vocale.

On notera bien entendu, que si dans le présent mode de réalisation, il est décrit six configurations distinctes de l'unité de commande 40 complétées par trois configurations supplémentaires, il est bien entendu possible en alternative, ceci sans que l'on sorte du cadre de l'invention, de prévoir que l'unité de commande 40 présente un nombre réduit de configurations :
- celles-ci étant soit combinées, par exemple les première et troisième configurations peuvent éventuellement combinées en autorisant la possibilité de soumettre soit une commande orale soit une image ou une combinaison des deux,
- être intégré en tant que fonctionnement alternative de certaines configurations de l'unité de commande 40, la lecture du texte permise par la cinquième configuration de l'unité de commande 40 pouvant par exemple être intégrée à la première configuration,
- soit tout simplement absente, l'unité de commande 40 pouvant par exemple ne pas comporter de cinquième configuration dédiée à la lecture par un utilisateur des histoires générées.

On notera également que d'une manière avantageuse, l'unité de commande 40 peut également être apte à communiquer avec un dispositif de communication personnel, tel qu'un mobile multifonction, et l'unité de commande 40 peut présenter des paramètres configurables par ledit dispositif de communication personnel. Ces paramètres configurables peuvent inclurent par exemple au moins l'un parmi :
- le choix d'une voix ou plusieurs voix à utiliser lors de la génération d'un fichier audio par synthèse vocale du texte de l'au moins une partie d'histoire récupérée (que cette synthèse vocale soit réalisé auprès du serveur informatique 5 ou de l'unité de commande 40), le choix de cette ou ces voix se faisant dans un groupe de voix incluant préférentiellement au moins une voix synthétisé à partir d'un enregistrement audio d'un utilisateur du dispositif interactif de contage d'histoire 3 conformément à la troisième configuration supplémentaire explicitée ci-dessus,
- un complément d'instructions à transmettre à l'unité de traitement lors de la transmission de l'au moins une commande orale émise par un utilisateur qui est relative à une histoire à conter, ledit complément pouvant être un thème de l'histoire à générer et/ou une indication relative à l'âge de l'utilisateur, ce complément d'instructions pouvant notamment être utilisé dans le cadre de la génération d'histoires aléatoires conformément à la première configuration supplémentaire de l'unité de commande 40,
- un complément d'instructions de génération relatif à la génération d'au moins une image à transmettre à l'unité de traitement, ledit complément d'instructions de génération pouvant être un style d'image à générer,
- un nombre d'histoire maximal à générer pendant une période de temps donnée, la première configuration de l'unité de commande étant bloqué lorsque ce nombre d'histoire généré pendant la période de temps donnée est atteint,

- une sélection d'histoires favorites accessible par l'utilisateur.

Pour permettre une telle communication entre le dispositif de communication personnel, tel qu'un mobile multifonction, de l'utilisateur et l'unité de commande 40, le système de communication 30 peut être configuré pour se connecter à réseau privatif de l'utilisateur, tel que par une communication sans fil du type wifi^{™}, le dispositif de communication personnel étant alors connecté au même réseau privatif, à un réseau public, par exemple internet, le dispositif de communication personnel et l'unité de commande 40 échangeant par l'intermédiaire d'un dispositif intermédiaire, par exemple un serveur web, ou autoriser une connexion directe avec le dispositif de communication personnel, par exemple par Bluetooth^{™}.

L'interaction entre l'utilisateur et l'unité de commande 40, ceci soit pour la faire passer dans la configuration souhaitée, soit pour permettre les interactions avec l'unité de commande 40 lorsqu'elle est dans la configuration souhaitée, peut se faire aux des éléments d'interaction homme-machine 61, 62, 63, 64, 65, 66, 67, 68, notamment du type mécanique. Ainsi dans le présent mode de réalisation, les éléments d'interaction homme-machine 61, 62, 63, 64, 65, 66, 67, 68 comprennent :
- le premier élément d'interaction homme-machine 61 formé par un potentiomètre avec interrupteur marche arrêt afin d'offrir à fois une fonction d'interrupteur marche-arrêt et une fonction de réglage du volume sonore du dispositif interactif de contage d'histoires 1,
- un deuxième élément d'interaction homme-machine 62 formé par un interrupteur impulsionnel, qui permet à l'utilisateur, lorsque l'unité de commande 40 est notamment dans la troisième configuration, permettre la capture d'une image à partir du capteur d'image 80,
- un troisième élément d'interaction homme-machine 63 du type interrupteur impulsionnel qui permet à l'utilisateur, lorsqu'il l'actionne de valider un choix ou de mettre en pause (ou lorsqu'elle est en pause, de redémarrer) la lecture d'un fichier audio, cet actionnement de ce troisième élément d'interaction homme-machine 63 peut également permettre, lorsque l'unité de commande 40 est dans la cinquième configuration, passer à une portion suivante du texte de l'histoire,
- un quatrième élément d'interaction homme-machine 64 du type interrupteur impulsionnel permettant à l'unité de commande 40 de passer dans la première configuration supplémentaire ou, lorsque l'unité de commande 40 a préalablement, et sous la commande de l'utilisateur, désactiver le système de communication 30, sélectionner la lecture d'une histoire aléatoire dans celles stockées dans la mémoire 45,
- un cinquième élément d'interaction homme-machine 65 du type interrupteur impulsionnel permettant à l'unité de commande 40 de passer dans la première configuration avec la commande orale qui est substituée par une commande demandant la génération d'une histoire avec un personnage préféré préalablement défini dans le cadre de la quatrième configuration, ou, lorsque l'unité de commande 40 a préalablement, et sous la commande de l'utilisateur, désactiver le système de communication 30, sélectionner la lecture d'une des histoires favorites dans celles stockées dans la mémoire 45,
- un sixième élément d'interaction homme-machine 66 du type interrupteur bistable, permettant à l'utilisateur de commander, lorsque ledit interrupteur est dans une première position, l'unité de commande 40 de passer le système de communication 30 dans un état activé, et, ledit interrupteur est dans une deuxième position, l'unité de commande 40 de passer le système de communication 30 dans un état désactivé,
- un septième élément d'interaction homme-machine 67 du type interrupteur bistable présentant une position activée et une position désactivée et permettant à l'utilisateur, lorsqu'il est dans la position activée, de déclencher l'enregistrement d'une commande orale notamment dans le cadre des première, troisième, quatrième, cinquième et sixième configurations de l'unité de command 40,
- un huitième élément d'interaction homme-machine 68 du type interrupteur bistable présentant une première et une deuxième position, et permettant à l'utilisateur de placer, dans la première position du huitième élément d'interaction homme-machine 68, l'unité de commande 40 dans la première configuration, c'est-à-dire dans laquelle la lecture du texte de l'histoire généré est fournie par la lecture du fichier audio généré par synthèse vocale et, dans la deuxième pois position du huitième élément d'interaction homme-machine 68, l'unité de commande 40 dans la cinquième configuration, c'est-à-dire dans laquelle la lecture du texte de l'histoire généré est réalisée par l'utilisateur, l'unité de commande commandant l'écran 20 pour afficher le texte de l'histoire générée.

En alternative, ou en complément, le dispositif interactif de contage d'histoires 3 peut être commandé par commande orale, d'une manière similaire au premier mode de réalisation, l'utilisateur utilisant des mots clés pour faire passer l'unité de commande dans la configuration désirée. Selon cette possibilité, le dispositif interactif de contage d'histoires 3 peut être configuré pour fournir, en fonctionnement une écoute constante dans l'attente de recevoir un mot clé, ou comprendre un élément d'interaction homme-machine dédié, comme le septième élément d'interaction homme-machine 67, afin de lancer l'écoute d'une commande.

De même, en complément, l'écran 20 peut également présenter une fonction de reconnaissance tactile offrant ainsi à l'utilisateur la possibilité d'interagir avec le dispositif interactif de contage d'histoires 3 et donc avec la configuration de son unité de commande 3. Cette possibilité peut ainsi autoriser une configuration de l'unité de commande 40 directement au moyen de la commande tactile offerte par l'écran et permet ainsi de gérer les différentes configurations de l'unité de commande 40,

Un tel dispositif interactif de contage d'histoires 3 participe, avec le serveur informatique 5, à la formation d'un ensemble de contage d'histoire.

Si dans le présent mode de réalisation, il décrit un unique serveur informatique 5 en tant qu'unité informatique, d'autres conformations sont parfaitement envisageables sans que l'on sorte du cadre de l'invention. Ainsi, l'unité informatique peut être fournie, en variante, par un ordinateur simple, un ensemble de serveur informatique, une unité électronique dédiée ou tout autre configuration équivalente.

Comme précisé ci-dessus et lorsque l'unité de commande 40 est dans la première configuration, le serveur informatique 5 est configuré pour :
- recevoir la commande orale de l'utilisateur transmise par l'unité de commande 40,
- générer de manière automatique le texte de l'histoire à partir de la commande orale,
- générer de manière automatique d'images 101, 102, 103, 104 à partir du texte de l'histoire généré,
- générer par synthèse vocale un fichier audio du texte de l'histoire généré,
- transmettre à l'unité de commande 30 le fichier audio et les images générées.

Dans une première approche de l'invention, le serveur 5 peut être configuré pour faire une première opération de reconnaissance vocale à partir de la commande orale transmise par l'unité de commande 40. En fonction des besoins et de la capacité d'expression et/ou d'élocution de l'utilisateur, le serveur informatique peut également corriger la transcription de la commande orale afin de compenser un défaut d'expression et/ou d'élocution. Le serveur informatique 5 peut en outre être configuré pour interroger des services de génération automatisé de texte, tels que des agents conversationnel (par exemple chatGPT^{™}), en soumettant audits service des interrogations adaptées pour la génération d'histoire pour enfants et y incluant la commande orale de l'utilisateur. Le serveur informatique 5 peut ensuite mettre en forme le texte de l'histoire à partir du résultat de cette interrogation pour définir le texte de l'histoire. D'une manière identique, pour la génération automatisée des images, le serveur peut être configuré pour interroger des services de génération automatisé d'images, tels qu'un programme d'intelligence artificielle générative (par exemple Midjourney^{™} ou DALL-E^{™}), en soumettant audits service des interrogations adaptées pour la génération d'image pour enfants et y incluant des sections du texte de l'histoire généré. Le serveur informatique 5 peut ensuite sélectionner les images les plus appropriées et les associés avec lesdites portions de texte pour qu'elles soient affichées au moment de la lecture des sections correspondantes. En complément, le serveur informatique 5 peut également être configuré pour fournir une 1 synthèse de vocale du texte et ainsi généré le fichier audio en vue de sa lecture par le dispositif interactif de contage d'histoires 3.

Dans une deuxième approche, le serveur informatique 5 peut mettre en oeuvre lui-même un agent conversationnel et/ou un programme d'intelligence artificielle générative spécialement entraîné afin de permettre une génération du texte de l'histoire et/ou des images. De cette manière, en plus de fournir des résultats particulièrement adaptés au contage d'histoire, cette deuxième approche permet de réduire les temps latence pour transmettre le résultat de la génération d'histoire au dispositif interactif de contage d'histoire 3.

De manière avantageuse, afin de rendre la lecture de l'histoire plus immersive, le serveur informatique 5 peut être configurée pour, lors de la génération automatique du texte de l'histoire, différencier les portions d'histoire relatif à au moins deux personnages dont avantageusement l'un est un narrateur de l'histoire et l'au moins un autre est un personnage de l'histoire. Selon cette possibilité, lors de la génération du fichier audio par synthèse vocale du texte de l'histoire par l'un de l'unité de commande 40 du dispositif interactif de contage d'histoire 3 et du serveur informatique 5, la synthèse vocale utilise pour chaque portion d'histoire une voix qui est respective au personnage associé à ladite portion d'histoire.

Dans le cas où la voix de l'utilisateur a été préalablement enregistré dans le cadre de la troisième configuration supplémentaire de l'unité de commande 40, la voix de l'utilisateur peut avantageusement être utilisée pour la synthèse vocale des portions d'histoire correspondant au narrateur, permettant de simuler la lecture de l'histoire par l'utilisateur.

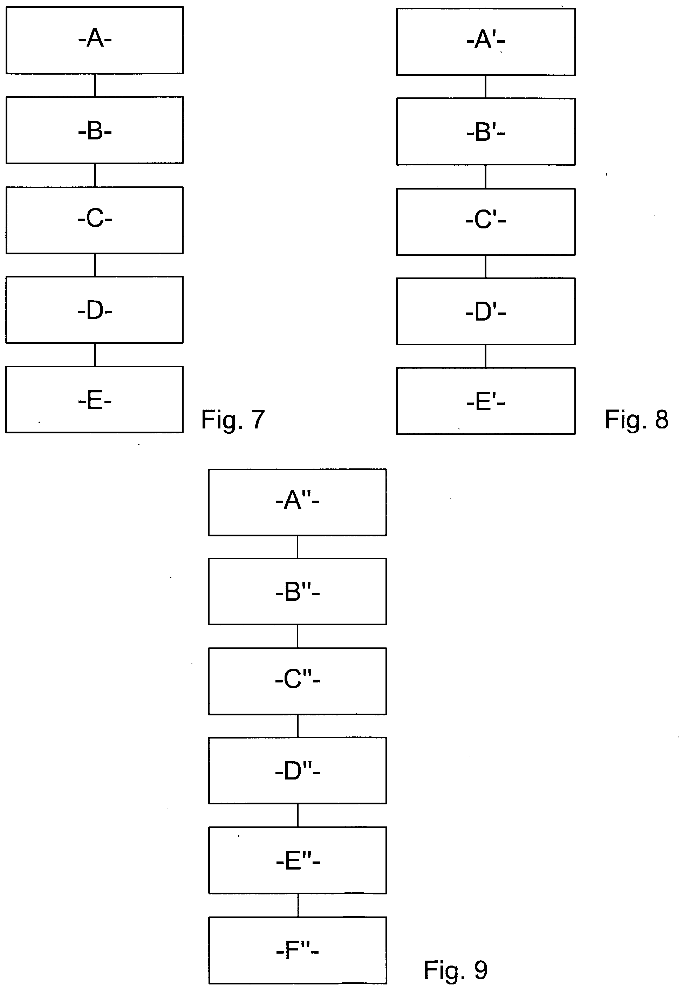

Le présent ensemble de contage 1 permet la mise en oeuvre d'un procédé de contage d'histoire à partir d'une commande orale tel qu'illustré par l'ordinogramme de la figure 7. Un tel procédé de contage comprend les étapes suivantes :
A. Récupération la commande orale émise par l'utilisateur qui est relative à l'histoire à conter,
B. Transmission de l'au moins une commande orale relative à l'histoire à conter à l'au moins un serveur informatique 5, le serveur informatique 5 étant apte à générer de manière automatique le texte de l'histoire à partir de la commande orale relative à l'histoire à conter, étant apte à générer de manière automatique au moins une image à partir du texte de l'histoire généré, et étant apte à fournir un fichier audio généré par synthèse vocale du texte de l'histoire,
C. récupération du fichier audio généré par le serveur informatique 5 et,
D. récupération auprès du serveur informatique 5 au moins une image générée automatiquement à partir du texte de l'histoire,
E. commande du haut-parleur 10 pour émettre le son issu de la lecture du fichier audio généré par synthèse vocale du texte de l'histoire et commande de l'écran 20 pour afficher l'au moins une image générée automatiquement à partir du texte de l'histoire.

D'une même manière le présent ensemble de contage 1 permet également la mise en oeuvre d'un procédé de contage d'histoire à partir d'une image capturée tel qu'illustré par l'ordinogramme de la figure 8 :
A'. récupération d'au moins une image à partir du capteur d'image 80 et éventuellement récupérer à partir du capteur 50 d'une commande orale optionnelle émise par l'utilisateur relative à une histoire à conter en relation avec l'image,
B'. transmettre au serveur informatique 5 l'au moins une image et, le cas échéant, l'au moins une commande orale optionnelle, le serveur informatique 5 étant apte à :
   ∘ réaliser une reconnaissance d'image à partir de l'au moins une image afin de fournir une description textuelle de ladite au moins une image,
   ∘ générer de manière automatique le texte de l'histoire à partir de la description textuelle et, le cas échéant, de l'au moins une commande orale optionnelle,
   ∘ générer de manière automatique au moins une image à partir du texte de l'histoire généré et de l'une parmi l'au moins une image et la description textuelle de ladite au moins une image,
   ∘ fournir un fichier audio généré par synthèse vocale du texte l'histoire généré,
C'. récupération du fichier audio généré par le serveur informatique 5,
D'. récupération auprès du serveur informatique 5 l'au moins une image générée automatiquement à partir du texte de l'histoire,
E'. commander le haut-parleur 50 pour émettre le son issu de la lecture du fichier audio généré par synthèse vocale du texte de l'histoire et commander l'écran 20 pour afficher l'au moins une image générée automatiquement à partir du texte de l'histoire.

D'une même manière le présent ensemble de contage 1 permet également la mise en oeuvre d'un procédé de génération d'au moins un personnage récurrent pour le contage d'histoire tel qu'illustré par l'ordinogramme de la figure 9 :
A". récupération à partir du microphone 50 d'une commande orale de description d'un personnage émise par l'utilisateur et/ou d'une image relative audit personnage et d'une dénomination associée à ce personnage,
B". soumission de la commande orale de description d'un personnage et/ou de l'image relative audit personnage au serveur informatique 5 de manière à ce que cette dernière génère automatiquement au moins deux images 105, 106, 107, 108 alternatives basées sur l'au moins une commande orale de description d'un personnage et/ou l'image relative audit personnage,
C". récupération des au moins deux images105, 106, 107, 108 alternatives générées par le serveur informatique 5,
D". commande de l'écran 20 pour afficher les au moins deux images 105, 106, 107, 108 alternatives générées par le serveur informatique 5, cet affichage pouvant être concomitant ou par alternance,
E". récupération d'une instruction de l'utilisateur de l'image à retenir pour le personnage parmi les au moins deux images 105, 106, 107, 108 alternatives générées,
F". association selon l'instruction de l'utilisateur l'image à retenir et/ou un descriptif textuel correspondant à ladite image à retenir avec la dénomination.

Bien entendu la présente invention couvre également les produits programme comprenant du code information configuré pour mettre en oeuvre les étapes des procédés illustrés par les ordinogrammes des figures 7 à 9 et les supports d'enregistrement informatique lisibles par un ordinateur stockant lesdits produits-programme.

## Revendications

1. Dispositif interactif de contage d'histoires (3) comprenant :
- au moins un haut-parleur (10) configuré pour émettre des sons,
- au moins un écran (20) configuré pour fournir un affichage,
- un système de communication (30), préférentiellement sans fils, configuré pour communiquer avec au moins une unité informatique (5),
- une unité de commande (40) configurée pour commander le haut-parleur (10) et l'affichage de l'écran (20) et pour se connecter à l'au moins une unité informatique (5) au moyen du système de communication (30),
le dispositif interactif de contage d'histoires (3) **étant caractérisé en ce qu'**il comprend en outre un capteur (50) apte à capturer des commandes orales émises par un utilisateur,
et **en ce que** l'unité de commande (40) présente au moins une première configuration dans laquelle l'unité de commande (40) est configurée pour :
- récupérer à partir du capteur (50) au moins une commande orale émise par l'utilisateur qui est relative à une histoire à conter,
- transmettre l'au moins une commande orale à l'au moins une unité informatique (5), l'au moins une unité informatique (5) étant apte à générer de manière automatique le texte d'au moins une partie d'histoire à partir de la commande orale, étant apte à générer de manière automatique au moins une image (101, 102, 103, 104, 111, 112, 113, 114, 116) à partir du texte de l'au moins une partie d'histoire généré, et étant éventuellement apte à fournir un fichier audio généré par synthèse vocale du texte de l'au moins une partie d'histoire,
- récupérer du texte de l'au moins une partie d'histoire et/ou de l'éventuel fichier audio généré par l'au moins une unité informatique et, dans le cas de la récupération unique du texte de l'au moins une partie d'histoire, générer un fichier audio par synthèse vocale du texte de l'au moins une partie d'histoire récupérée,
- récupérer auprès de l'au moins une unité informatique (5) au moins une image générée automatiquement à partir du texte de l'au moins une partie d'histoire,
- commander l'au moins un haut-parleur (10) pour émettre le son issu de la lecture du fichier audio généré par synthèse vocale de l'au moins une partie d'histoire et commander l'au moins un écran (20) pour afficher l'au moins une image générée automatiquement à partir du texte de l'au moins une partie d'histoire.

2. Dispositif interactif de contage d'histoires (3) selon la revendication 1 comprenant en outre une mémoire (45) apte à stocker des fichiers audio, ou du texte, et des images,
dans lequel, l'unité de commande (40) présente une deuxième configuration dans laquelle l'unité de commande (40) est configurée pour désactiver le système de communication (30) et le capteur (50), et pour commander le haut-parleur (10) pour émettre le son issu des fichiers audio ou de fichiers audio générés par synthèse vocale du texte stockés dans la mémoire (45), et l'écran (20) pour afficher au moins images stockées dans la mémoire, les fichiers audio ou texte et les images stockés dans la mémoire (45) étant avantageusement des fichiers audio, ou du texte, et des images préalablement générés automatiquement par l'au moins une unité informatique (5) à partir de commandes orales de l'utilisateur lorsque l'unité de commande (40) était dans la première configuration.

3. Dispositif interactif de contage d'histoire (3) selon la revendication 1 ou 2 comprenant en outre au moins un système d'acquisition d'image adapté pour récupérer au moins une image,
et dans lequel, l'unité de commande (40) présente au moins une troisième configuration dans laquelle l'unité de commande (40) est configurée pour :
- récupérer au moins une image à partir de l'au moins un système d'acquisition d'image et éventuellement récupérer à partir du capteur (50) au moins une commande orale optionnelle émise par l'utilisateur relative à une histoire à conter en relation avec l'image,
- transmettre à l'au moins une unité informatique (5) l'au moins une image et, le cas échéant, l'au moins une commande orale optionnelle, l'au moins une unité informatique (5) étant apte à :
∘ réaliser une reconnaissance d'image à partir de l'au moins une image afin de fournir une description textuelle de ladite au moins une image,
∘ générer de manière automatique le texte d'au moins une partie d'histoire à partir de la description textuelle et, le cas échéant, de l'au moins une commande orale optionnelle,
∘ générer de manière automatique au moins une image à partir du texte de l'au moins une partie d'histoire généré et de l'une parmi l'au moins une image et la description textuelle de ladite au moins une image,
∘ éventuellement fournir un fichier audio généré par synthèse vocale du texte l'au moins une partie d'histoire,
- récupérer le texte de l'au moins une partie d'histoire et/ou de l'éventuel fichier audio généré par l'au moins une unité informatique (5) et, dans le cas de la récupération unique du texte de l'au moins une partie d'histoire, générer un fichier audio par synthèse vocale du texte l'au moins une partie d'histoire récupérée,
- récupérer auprès de l'au moins une unité informatique (5) l'au moins une image générée automatiquement à partir du texte de l'au moins une partie d'histoire,
- commander l'au moins un haut-parleur (50) pour émettre le son issu de la lecture du fichier audio généré par synthèse vocale du texte de l'au moins une partie d'histoire et commander l'au moins un écran pour afficher l'au moins une image générée automatiquement à partir du texte de l'au moins une partie d'histoire.

4. Dispositif interactif de contage d'histoire (3) selon la revendication 3, dans lequel le système d'acquisition d'image comprend au moins l'un parmi :
- un capteur d'image (80), tel qu'un capteur CCD ou CMOS, apte à capturer une image dans l'environnement du dispositif interactif de contage d'histoire (3), le dispositif interactif de contage d'histoire pouvant comprendre en outre et de manière avantageuse un système de visé (81) permettant une prévisualisation l'environnement du dispositif interactif de contage d'histoire (3) avant la captation par le capteur d'image (80),
- un dispositif de pointage intégré ou associé à l'au moins un écran et apte à capturer le déplacement d'un élément, tel qu'un doigt ou un stylet, le long de l'au moins un écran et à fournir une image générée par ce déplacement,
- un module de récupération d'image, avantageusement intégré à l'unité de commande, et apte à récupérer, notamment au moyen du système de communication, une ou plusieurs image transmis par l'utilisateur au moyen d'un dispositif de communication personnel, tel qu'un mobile multifonction.

5. Dispositif interactif de contage d'histoire (3) selon l'une quelconque des revendications 1 à 4, dans lequel l'unité de commande (40) présente au moins une quatrième configuration pour la génération d'au moins un personnage récurrent, l'unité de commande (40) étant configurée dans la quatrième configuration pour :
- récupérer à partir du capteur (50) au moins une commande orale de description d'un personnage émise par l'utilisateur et/ou une image relative audit personnage et d'une dénomination associée à ce personnage,
- soumettre l'au moins une commande orale de description d'un personnage et/ou l'image relative audit personnage à l'au moins une unité informatique (5) de manière à ce que cette dernière génère automatiquement au moins deux images (105, 106, 107, 108) alternatives basées sur l'au moins une commande orale de description d'un personnage et/ou l'image relative audit personnage,
- récupérer les au moins deux images(105, 106, 107, 108) alternatives générées par l'au moins une unité informatique (5),
- commander l'au moins écran (20) pour afficher les au moins deux images (105, 106, 107, 108) alternatives générées par l'au moins une unité informatique (5), cet affichage pouvant être concomitant ou par alternance,
- récupérer une instruction de l'utilisateur de l'image à retenir pour le personnage parmi les au moins deux images (105, 106, 107, 108) alternatives générées,
- associer selon l'instruction de l'utilisateur l'image à retenir et/ou un descriptif textuel correspondant à ladite image à retenir avec la dénomination,
dans lequel, lorsque l'unité de commande est dans la première configuration, l'unité de commande (40) est en outre configurée pour, lors de la transmission de l'au moins une commande orale relative à une histoire à conter à l'au moins une unité informatique (5) et de l'utilisation de la dénomination associée au personnage, transmettre le descriptif textuel et/ ou l'image à retenir de manière à permettre d'intégrer le personnage illustré sur ladite image à retenir dans l'au moins une image générée automatiquement à partir du texte de l'au moins une partie d'histoire.

6. Dispositif interactif de contage d'histoire (3) selon l'une quelconque des revendications 1 à 5, dans lequel l'unité de commande (40) comprend au moins une cinquième configuration dans laquelle l'unité de commande (40) est configurée pour :
- récupérer à partir du capteur (50) au moins une commande orale émise par l'utilisateur qui est relative à une histoire à conter,
- transmettre l'au moins une commande orale à l'au moins une unité informatique (5), l'au moins une unité informatique (5) étant apte à générer de manière automatique le texte d'au moins une partie d'histoire à partir de la commande orale,
- récupérer du texte de l'au moins une partie d'histoire,
- optionnellement récupérer auprès de l'au moins une unité informatique (5) au moins une image générée automatiquement à partir du texte de l'au moins une partie d'histoire,
- commander l'au moins un écran (20) pour afficher le texte de l'au moins une partie d'histoire de manière à permettre sa lecture par l'utilisateur et, de manière optionnelle, lorsque l'au moins une image générée automatiquement à partir du texte de l'au moins une partie d'histoire a été récupérée, ladite au moins une image générée automatiquement.

7. Dispositif interactif de contage d'histoire (3) selon l'une quelconque des revendication 1 à 6, l'unité de commande (40) est apte à communiquer avec un dispositif de communication personnel, tel qu'un mobile multifonction, et dans lequel l'unité de commande (40) présente des paramètres configurables par ledit dispositif de communication personnel incluant avantageusement au moins l'un parmi :
- le choix d'une voix ou plusieurs voix à utiliser lors de la génération d'un fichier audio par synthèse vocale du texte de l'au moins une partie d'histoire récupérée, le choix de cette ou ces voix se faisant dans un groupe de voix incluant préférentiellement au moins une voix synthétisée à partir d'un enregistrement audio d'un utilisateur du dispositif interactif de contage d'histoire (3),
- un complément d'instructions à transmettre à l'unité de traitement lors de la transmission de l'au moins une commande orale émise par un utilisateur qui est relative à une histoire à conter, ledit complément pouvant être un thème de l'histoire à générer et/ou une indication relative à l'âge de l'utilisateur,
- un complément d'instructions de génération relatif à la génération d'au moins une image à transmettre à l'unité de traitement, ledit complément d'instructions de génération pouvant être un style d'image à générer,
- un nombre d'histoire maximal à générer pendant une période de temps donnée, la première configuration de l'unité de commande étant bloqué lorsque ce nombre d'histoire généré pendant la période de temps donnée est atteint,
- une sélection d'histoires favorites accessible par l'utilisateur.

8. Dispositif interactif de contage d'histoire (3) selon la revendication 1 à 7, dans lequel l'unité de commande (40) comprend au moins une sixième configuration dans laquelle l'unité de commande (40) est configurée pour :
- récupérer à partir du capteur (50) au moins une commande orale de génération d'une comptine et/ou une image relative à la génération d'une telle comptine,
- transmettre l'au moins une commande orale de génération d'une comptine et/ou l'image relative à la génération d'une telle comptine à l'au moins une unité informatique (5), l'au moins une unité informatique (5) étant apte à générer de manière automatique le texte d'au moins une comptine à partir de la commande orale de génération d'une comptine et/ou l'image relative à la génération d'une telle comptine, et étant éventuellement apte à fournir un fichier audio généré par synthèse vocale du texte de l'au moins une comptine à partir du texte de l'au moins une comptine généré de manière automatique,
- récupérer le texte de l'au moins une comptine généré de manière automatique et/ou de l'éventuel fichier audio généré par l'au moins une unité informatique (5) et, dans le cas de la récupération unique du texte de l'au moins une comptine, générer un fichier audio par synthèse vocale du texte de l'au moins une comptine généré de manière automatique,
- commander l'au moins un haut-parleur (10) pour émettre le son issu de la lecture du fichier audio généré par synthèse vocale du texte de l'au moins une comptine généré de manière automatique.

9. Procédé interactif de contage d'histoire comprenant les étapes suivantes :
A. Récupération d'au moins une commande orale émise par un utilisateur qui est relative à une histoire à conter,
B. Transmission de l'au moins une commande orale relative à une histoire à conter à l'au moins une unité informatique (5), l'au moins une unité informatique étant apte à générer de manière automatique le texte d'au moins une partie d'histoire à partir de la commande orale relative à une histoire à conter, étant apte à générer de manière automatique au moins une image à partir du texte de l'au moins une partie d'histoire généré, et étant éventuellement apte à fournir un fichier audio généré par synthèse vocale du texte de l'au moins une partie d'histoire,
C. récupération du texte de l'au moins une partie d'histoire et/ou de l'éventuel fichier audio généré par l'au moins une unité informatique et dans le cas de la récupération du texte de l'au moins une partie d'histoire, génération un fichier audio par synthèse vocale du texte de l'au moins une partie d'histoire récupérée,
D. récupération auprès de l'au moins une unité informatique (5) au moins une image générée automatiquement à partir du texte de l'au moins une partie d'histoire,
E. commande de l'au moins un haut-parleur (10) pour émettre le son issu de la lecture du fichier audio généré par synthèse vocale du texte de l'au moins une partie d'histoire et commande d'un écran pour afficher l'au moins une image générée automatiquement à partir du texte de l'au moins une partie d'histoire.

10. Produit programme d'ordinateur comprenant du code information configuré pour mettre en oeuvre les étapes d'un procédé interactif de contage d'histoire selon la revendication 9 lorsqu'il est exécuté sur un ordinateur.

11. Support d'enregistrement informatique lisible par un ordinateur stockant le produit-programme selon la revendication 10.

12. Ensemble de contage d'histoire (1)comprenant :
- Un dispositif interactif de contage d'histoire (3) selon l'une quelconque des revendications 1 à 8,
- Au moins une unité informatique (5), ladite au moins une unité informatique (5) étant apte à générer de manière automatique le texte d'au moins une partie d'histoire à partir d'au moins une commande orale fournie par le dispositif interactif de contage d'histoire (3), étant apte à générer de manière automatique au moins une image à partir du texte de l'au moins une partie d'histoire généré, et étant éventuellement apte à fournir un fichier audio généré par synthèse fichier vocale de l'au moins une partie d'histoire.

13. Ensemble de contage d'histoire(1) dans lequel l'au moins une unité informatique (5) est configurée pour, lors de la génération automatique du texte de l'au moins une partie d'histoire, différencier les portions d'histoire relatif à au moins deux personnages dont avantageusement l'un est un narrateur de l'histoire et l'au moins un autre est un personnage de l'histoire,
dans lequel lors de la génération un fichier audio par synthèse vocale du texte de l'au moins une partie d'histoire par l'un de l'unité de commande (40) du dispositif interactif de contage d'histoire (3) et de l'au moins une unité informatique (5), la synthèse vocale utilise pour chaque portion d'histoire une voix qui est respective au personnage associé à ladite portion d'histoire.
